# EUROPÄISCHE PATENTSCHRIFT

(11) **EP 3 782 378 B1**
(45) Veröffentlichungstag und Bekanntmachung des Hinweises auf die Patenterteilung: **01.02.2023**
(21) Anmeldenummer: 19708393.4
(22) Anmeldetag: 19.02.2019
(51) Int. Cl.: H04R 1/34, H04R 1/02, H04M 1/60, G01C 21/26

(54) **SPRACHASSISTENZVORRICHTUNG FÜR KRAFTFAHRZEUGE**
VOICE ASSISTANCE DEVICE FOR MOTOR VEHICLES
DISPOSITIF D'ASSISTANCE VOCALE POUR VÉHICULES À MOTEUR

(30) Priorität: 18.04.2018 DE 102018003190
(43) Veröffentlichungstag der Anmeldung: 24.02.2021
(73) Patentinhaber: paragon GmbH & Co. KGaA, 33129 Delbrück (DE)
(72) Erfinder: FRERS, Klaus Dieter, 33129 Delbrück (DE)
(74) Vertreter: Lelgemann, Karl-Heinz
(86) Internationale Anmeldenummer: PCT/EP2019/000051
(87) Internationale Veröffentlichungsnummer: WO 2019/201467

(56) Entgegenhaltungen:
- EP-A1- 1 791 389
- EP-A1- 2 966 858
- DE-U1-202012 006 914
- US-A1- 2012 045 072
- US-B1- 9 688 147

## Beschreibung

Die Erfindung bezieht sich auf eine Sprachassistenzvorrichtung für Kraftfahrzeuge, die im Innenraum des Kraftfahrzeugs anordbar ist, mit einem Display, das an der Vorderseite der Sprachassistenzvorrichtung ausgebildet ist, zumindest einem Mikrofon, das im oder am Display angeordnet ist, und einem Lautsprecher, mittels dem Audiosignale der Sprachassistenzvorrichtung in den Innenraum des Kraftfahrzeugs ausgebbar sind.

Bei bekannten derartigen Sprachassistenzvorrichtungen für Kraftfahrzeuge ist nachteilig, dass die Qualität der Beschallung des Innenraums des Kraftfahrzeugs vergleichsweise gering ist.

Die Druckschrift DE 20 2012 006914 U1 offenbart eine Gehäusestruktur für Tablets und Mobiltelefone, welche eine Schallwellenführung von eingebauten Lautsprechern an einer Gehäuseseite für einen Schallaustritt zeigt. Dabei werden als Anwendungsfälle Sprachassistenz- und Freisprechsysteme in einem Kraftfahrzeug genannt. 1

Die Druckschrift EP 1 791 389 A1 offenbart eine Anordnung von rechteckigen Lautsprecherschallaustrittsöffnungen, welche zwischen den Bildschirmaussenkanten und den Gehäuseaussenkanten angeordnet sind, wobei diese Anordnung für Automobilnavigationsvorrichtungen gedacht ist. 1

Die Druckschrift US 9 688 147 B1 offenbart eine Anordnung von Lautsprecherschallaustrittsöffnungen in einer Automobilinstrumentenanzeige, welche zwischen den Bildschirmaussenkanten und den Gehäuseaussenkanten angeordnet sind.

Ausgehend von dem vorstehend geschilderten Stand der Technik liegt der Erfindung die Aufgabe zugrunde, die eingangs geschilderte Sprachassistenzvorrichtung für Kraftfahrzeuge derart weiterzubilden, dass mittels ihr eine mit einer erheblich besseren Qualität einhergehende Beschallung des Innenraums des Kraftfahrzeugs ermöglicht werden kann.

Diese Aufgabe wird erfindungsgemäß dadurch gelöst, dass der Lautsprecher der Sprachassistenzvorrichtung eine Schallaustrittsöffnung aufweist, die an der das Display und das Mikrofon aufweisenden Vorderseite der Sprachassistenzvorrichtung angeordnet ist. Hierdurch kann, wenn die Vorderseite der Sprachassistenzvorrichtung wie üblich zum Innenraum des Kraftfahrzeugs hin orientiert ist, eine Beschallung des Innenraums des Kraftfahrzeugs mit hoher Qualität sichergestellt werden.

Um eine Betätigung des berührungssensitiven Displays bequem zu ermöglichen, ist erfindungsgemäβ die Schallaustrittsöffnung des Lautsprechers näher zum Außenrand der Vorderseite der Sprachassistenzvorrichtung hin angeordnet als das Display bzw. das im bzw. am Display vorgesehene Mikrofon.

Bei der erfindungsgemäßen Sprachassistenzvorrichtung ist die Schallaustrittsöffnung des Lautsprechers so angeordnet, dass sie das Display inklusive Mikrofon umgibt.

Bei der erfindungsgemäßen Sprachassistenzvorrichtung nimmt die Schallaustrittsöffnung des Lautsprechers den gesamten oder nahezu den gesamten Flächenabschnitt der Vorderseite der Sprachassistenzvorrichtung zwischen dem Außenrand des Displays inklusive Mikrofon einerseits und dem Außenrand der Vorderseite der Sprachassistenzvorrichtung andererseits ein.

Sofern die Vorderseite der Sprachassistenzvorrichtung rund ausgestaltet ist und die Schallaustrittsöffnung des Lautsprechers einen radial äußeren Kreisring der Vorderfläche der Sprachassistenzvorrichtung bildet, lässt sich die erfindungsgemäße Sprachassistenzvorrichtung in einer ästhetisch ansprechenden Form ausgestalten, wobei sowohl die Bedienfreundlichkeit des Displays als auch die Abstrahlung akustischer Signale mittels des Lautsprechers in hervorragender Qualität gewährleistet werden kann.

Zweckmäßigerweise weist die erfindungsgemäße Sprachassistenzvorrichtung einen elektronischen Analog/Digital-Wandler auf, mittels dem bei Betrieb des Mikrofons und des Lautsprechers mögliche Störungen, Interferenzen ud.dgl. durch Herausrechnen des Lautsprecher-Nutzsignals aus dem Mikrofonsignal unterdrück- bzw. ausgleichbar sind.

Die erfindungsgemäße Sprachassistenzvorrichtung ist vorteilhaft in einem Gehäuse aufgenommen, dessen der Vorderseite der Sprachassistenzvorrichtung zugeordneter Innenrand die Schallaustrittsöffnung des Lautsprechers begrenzt.

Im Folgenden wird die Erfindung anhand einer Ausführungsform unter Bezugnahme auf die Zeichnung näher erläutert, in deren einziger Figur eine perspektivische Darstellung einer Ausführungsform einer erfindungsgemäßen Sprachassistenzvorrichtung für Kraftfahrzeuge gezeigt ist.

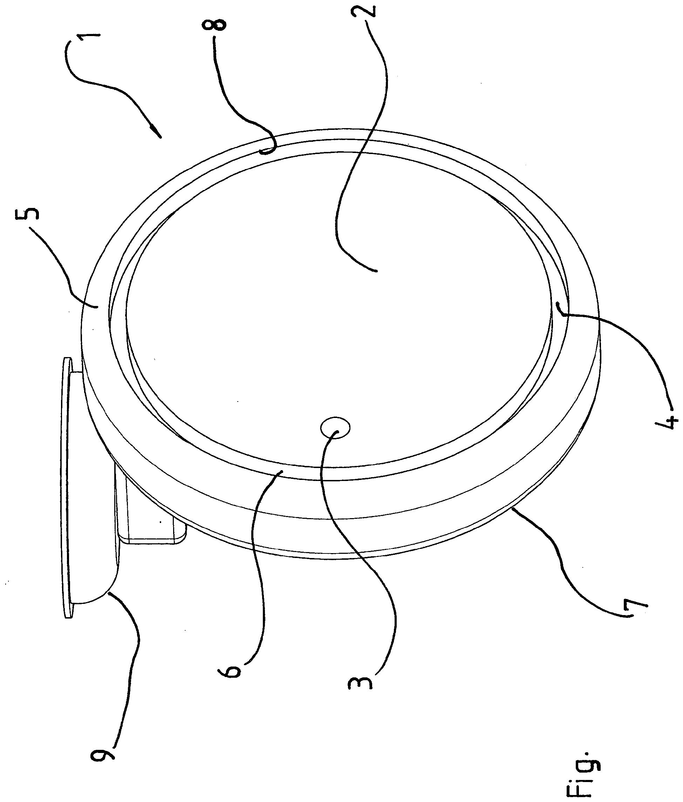

Eine in der einzigen Figur gezeigte Ausführungsform einer erfindungsgemäßen Sprachassistenzvorrichtung 1 für Kraftfahrzeuge wird im Innenraum eines im Übrigen nicht dargestellten Kraftfahrzeugs angeordnet. Bei der in Figur 1 gezeigten Ausführungsform der erfindungsgemäßen Sprachassistenzvorrichtung ist diese mit einem Befestigungsmittel 9 versehen, mittels dem die Sprachassistenzvorrichtung 1 z.B. an der Innenseite einer Windschutzscheibe des Kraftfahrzeugs platzierbar ist.

Zu der in der Figur gezeigten Ausführungsform der Sprachassistenzvorrichtung 1 gehören ein Display 2, das an der Vorderseite der Sprachassistenzvorrichtung 1 angeordnet bzw. ausgebildet ist, ein Mikrofon 3, das im dargestellten Ausführungsbeispiel der erfindungsgemäßen Sprachassistenzvorrichtung innerhalb der durch das Display 2 eingenommenen Fläche der Vorderseite der Sprachassistenzvorrichtung 1 angeordnet ist, und ein in der Figur nicht sichtbarer Lautsprecher, mittels dem Audiosignale der Sprachassistenzvorrichtung 1 in den Innenraum des Kraftfahrzeugs ausgegeben werden können.

Es sei darauf hingewiesen, dass bei anderen Ausführungsformen der erfindungsgemäßen Sprachassistenzvorrichtung auch mehr als ein Mikrofon 3 vorgesehen sein können.

Wie sich aus der perspektivischen Darstellung der Sprachassistenzvorrichtung 1 ergibt, ist eine Schallaustrittsöffnung 4 des Lautsprechers an der Vorderseite der Sprachassistenzvorrichtung 1 angeordnet. Die Schallaustrittsöffnung 4 ist also gemeinsam mit dem Display 2 und dem Mikrofon 3 an der Vorderseite der in der einzigen Figur gezeigten erfindungsgemäßen Sprachassistenzvorrichtung angeordnet bzw. ausgebildet.

Ein Außenrand 5 der in der einzigen Figur gezeigten Ausführungsform der erfindungsgemäßen Sprachassistenzvorrichtung 1 wird durch einen Innenrand 8 eines Gehäuses 7 der Sprachassistenzvorrichtung 1 gebildet. Mittels des Innenrands 8 des Gehäuses 7 wird die Schallaustrittsöffnung 4 des in der Figur nicht gezeigten Lautsprechers der Sprachassistenzvorrichtung 1 an der Vorderseite derselben nach außen begrenzt.

Im dargestellten Ausführungsbeispiel ist die Schallaustrittsöffnung 4 des Lautsprechers der Sprachassistenzvorrichtung 1 in Form eines radial äußeren Kreisrings 6 der Vorderfläche der Sprachassistenzvorrichtung 1 ausgestaltet.

Dieser die Schallaustrittsöffnung 4 bildende Kreisring 6 umgibt das kreisförmige Display 2, an dem das Mikrofon 3 ausgebildet ist.

Die Schallaustrittsöffnung 4 des Lautsprechers der Sprachassistenzvorrichtung 1 umgibt somit das Display 2 an der Vorderseite der Sprachassistenzvorrichtung 1.

Um einen störungsfreien Betrieb der Sprachassistenzvorrichtung 1 zu gewährleisten, ist diese mit einem in der Figur nicht gezeigten elektronischen Analog/Digital-Wandler ausgerüstet. Dieser Analog/Digital-Wandler kann mögliche Störungen, Interferenzen ud.dgl. beim Betrieb des Mikrofons 3 und des Lautsprechers unterdrücken bzw. ausgleichen, indem er ein Lautsprecher-Nutzsignal aus dem Mikrofonsignal herausrechnet.

## Patentansprüche

1. Sprachassistenzvorrichtung für Kraftfahrzeuge, die im Innenraum des Kraftfahrzeugs anordbar ist, mit einem Display (2), das an der Vorderseite der Sprachassistenzvorrichtung (1) ausgebildet ist, zumindest einem Mikrofon (3), das im oder am Display (2) angeordnet ist, und einem Lautsprecher, mittels dem Audiosignale der Sprachassistenzvorrichtung (1) in den Innenraum des Kraftfahrzeugs ausgebbar sind, wobei
der Lautsprecher eine Schallaustrittsöffnung (4) aufweist, die an der das Display (2) und das Mikrofon (3) aufweisenden Vorderseite der Sprachassistenzvorrichtung (1) angeordnet ist, wobei
die Schallaustrittsöffnung (4) des Lautsprechers näher zum Außenrand (5) der Vorderseite der Sprachassistenzvorrichtung (1) angeordnet ist als das Display (2) bzw. das Mikrofon (3), wobei
die Schallaustrittsöffnung (4) des Lautsprechers das Display (2) inklusive Mikrofon (3) umgibt, **dadurch gekennzeichnet**
**dass** die Schallaustrittsöffnung (4) den gesamten oder nahezu den gesamten Flächenabschnitt der Vorderseite der Sprachassistenzvorrichtung (1) zwischen dem Außenrand des Displays (2) inklusive Mikrofon (3) einerseits und dem Außenrand (5) der Vorderseite der Sprachassistenzvorrichtung (1) andererseits einnimmt.

2. Sprachassistenzvorrichtung nach Anspruch 1, bei der die Vorderseite der Sprachassistenzvorrichtung (1) rund ist und die Schallaustrittsöffnung (4) des Lautsprechers einen radial äußeren Kreisring (6) der Vorderfläche der Sprachassistenzvorrichtung (1) bildet.

3. Sprachassistenzvorrichtung nach Anspruch 1 oder 2, zu der ein elektronischer Analog/Digital-Wandler gehört, mittels dem bei Betrieb des Mikrofons (3) und des Lautsprechers mögliche Störungen, Interferenzen ud.dgl. durch Herausrechnen des Lautsprecher-Nutzsignals aus dem Mikrofonsignal unterdrück- bzw. ausgleichbar sind.

4. Sprachassistenzvorrichtung nach einem der Ansprüche 1 bis 3, die in einem Gehäuse (7) aufgenommen ist, dessen der Vorderseite der Sprachassistenzvorrichtung (1) zugeordneter Innenrand (8) die Schallaustrittsöffnung (4) des Lautsprechers begrenzt.

## Claims

1. A voice assistance device for motor vehicles which can be arranged in the interior of the motor vehicle, having a display (2) which is configured on the front of the voice assistant device (1), at least one microphone (3) which is arranged in or on the display (2), and a speaker by means of which audio signals from the voice assistant device (1) can be output into the interior of the motor vehicle, wherein the speaker has a sound outlet opening (4) which is arranged on the front of the voice assistant device (1) exhibiting the display (2) and the microphone (3), wherein the sound outlet opening (4) of the speaker is arranged closer to the outer edge (5) of the front of the voice assistant device (1) than the display (2) or the microphone (3), wherein the sound outlet opening (4) of the speaker surrounds the display (2) including the microphone (3), **characterized in that** the sound outlet opening (4) occupies the entire, or virtually the entire, surface portion of the front of the voice assistant device (1) between the outer edge of the display (2) including the microphone (3), on the one hand, and the outer edge (5) of the front of the voice assistant device (1), on the other.

2. The voice assistant device according to claim 1, wherein the front of the voice assistant device (1) is round in design and the sound outlet opening (4) of the speaker forms a radially outer circular ring (6) of the front face of the voice assistant device (1).

3. The voice assistant device according claim 1 or 2, which includes an electronic analog-digital converter, by means of which possible disturbances, interference, etc. during operation of the microphone (3) and the speaker can be suppressed or balanced by excluding the speaker's useful signal from the microphone signal.

4. The voice assistant device according to one of claims 1 to 3 which is contained in a housing (7), whereof the inner edge (8) assigned to the front of the voice assistant device (1) delimits the sound outlet opening (4) of the speaker.

## Revendications

1. Dispositif d'assistance vocale pour véhicules à moteur, pouvant être disposé à l'intérieur du véhicule à moteur, avec un affichage (2), qui est formé sur la face avant du dispositif d'assistance vocale (1), ou moins un microphone (3), qui est agencé dans ou sur l'affichage (2), et un haut-parleur, au moyen duquel des signaux audio du dispositif d'assistance vocale (1) peuvent être délivrés à l'interieur du véhicule à moteur, le haut-parleur présentant une ouverture de sortie sonore (4), qui est disposée à la face avant du dispositif d'assistance vocale (1) comprenant l'affichage (2) et le mircophone (3), l'ouverture de sortie sonore (4) du haut-parleur étant disposée plus près du bord extérieur (5) de la face avant du dispositif d'assistance vocale (1) que l'affichage (2) ou le microphone (3), l'ouverture de sortie sonore (4) du haut-parleur entourant l'affichage (2) inclusivement le microphone (3), **caractérisé en ce que** l'ouverture de sortie sonore (4) couvre toute ou presque toute la section de surface de la face avant du dispositif d'assistance vocale (1) entre le bord extérieur de l'affichage (2) inclusivement le microphone (3) d'une part et le bord extérieur (5) de la face avant du dispositif d'assistance vocale (1) d'autre part.

2. Dispositif d'assistance vocale selon la revendication 1, dans lequel la face avant du dispositif d'assistance vocale (1) est ronde et l'ouverture de sortie sonore (4) du haut-parleur est un anneau radial extérieur (6) de la face avant du dispositif d'assistance vocale (1).

3. Dispositif d'assistance vocale selon la revendication 1 ou 2, avec un convertisseur électronique analogique/numérique, au moyen duquel lors du fonctionnement du microphone (3) et du haut-parleur d'éventuelles perturbations, interférences et analogues peuvent être suprimées ou compensées en soustrayant le signal utile du haut-parleur du signal du microphone.

4. Dispositif d'assistance vocale selon l'une des revendications 1 à 3, qui est logé dans un boîtier (7) dont le bord intérieur (8) affecté a face avant du dispositif d'assistance vocale (1) délimite l'ouverture de sortie sonore (4) du haut-parleur.
